# EUROPEAN PATENT SPECIFICATION

(11) **EP 2 407 676 B1**
(45) Date of publication and mention of the grant of the patent: **19.03.2014**
(21) Application number: 10169238.2
(22) Date of filing: 12.07.2010
(51) Int. Cl.: F16B 13/06

(54) **Structure of a build-in screw in a bushing and corresponding sensor housing**
Struktur einer eingebauten Schraube in einer Buchse und zugehöriges Sensorgehäuse
Structure de vis intégrée dans une traversée et boîtier de capteur correspondant

(43) Date of publication of application: 18.01.2012
(73) Proprietor: Robert Bosch GmbH, 70442 Stuttgart (DE)
(72) Inventor: Ninomiya, Kenichi, 71636, Ludwigsburg (DE)

(56) References cited:
- EP-A2- 1 229 257
- US-A1- 2008 240 884

## Description

### BACKGROUND OF THE INVENTION

### Field of the Invention

The present invention relates in general to the field of fixings and/or fasteners used for sensor units in a vehicle, and in particular to a structure of a build-in screw in a bushing, and corresponding sensor housing.

### Description of the Related Art

A known structure of a build-in screw in a bushing needs to rotate the screw for a fixing process. So the screw is fixed by tapping at plastic parts in inner of a bushing. Another known structure of a build-in screw in a bushing use additional parts to fix the screw. Here the screw can be assembled in a press-in process only, but additional parts are needed.

In the Patent Application Publication DE 197 45 894 A1 a screw connection for an airbag housing is described. The described screw connection for the airbag housing comprises a threaded hole formed in a cylindrical bushing formed in a wall of a support structure or in the airbag housing by plastic flow forming. The thread in the hole is formed by non-cutting plastic forming by a thread molding tool, or by a cutting process using self-tapping screws. The airbag housing has a retaining arm with at least one through-hole for a fixing screw which is screwed into the threaded hole in the fastened state.

In the Patent Application Publication US 2002/106257 A1 an assembly unit including a component and at least one screw is described. The described assembly unit includes at least one component and at least one screw including a shank having an outer diameter and at least partially including a thread. The head of the screw is designed and arranged to rotate the screw. A supporting surface of the screw faces the component. The component for each screw includes a through hole having a diameter. At least one bushing is associated with the at least one screw, and it is designed and arranged to be insertable into the respective through hole. The bushing is made of plastic material, and it is connected in the through hole of the component under elastic deformation with frictional engagement and/or with form fit. Frictional engagement is also to be understood as force connection which, for example, is effected by micro-encapsulated glue applied onto the outer surface area of the bushing or on to the cylindrical surface of the through hole in the component. The through hole may be designed as a simple bore. The inner diameter of the bushing is only slightly greater than the outer diameter of the thread of the screw. The screw only contacts the bushing in the region of a collar protruding towards the inside. The screw is centrically guided by the length of the bushing. Assembly of the screw and of the bushing advantageously acquires low assembly forces. Pre-assembly may be well automatized since simple pressing of the screw with respect to the bushing is only necessary without any turning movement or bocking movement. The screw may be pressed into the bushing being located in the component. However, it is also possible to first push the bushing onto the screw and to then introduce the bushing into the component. Due to the use of the bushing being made of plastic material, there is no danger of contact corrosion, as it occurs between a bushing being made of steel and a component being made of magnesium.

In the Patent Application Publication US 2008/0240884 A1 a locking device is described. The described locking device includes a nut having a body portion and an end portion. The endportion has a proximal end proximate to the body portion and a distal end. The nut has an inner surface defining a nut aperture that extends through the body portion and the end portion with the inner surface of the nut being at least partially threaded. The locking device also includes a bolt having a head and a body. The head of the bolt defines a head aperture therein that extends into the body of the bolt. The body of the bolt is at least partially threaded to matingly engage the threaded inner surface of the nut. The body also defines at least one slot therein that is in communication with the head aperture. Slats are disposed along the distal end of the end portion of the nut. The slats are configured to engage the at least one slot defined in the body of bolt.

### Summary of the Invention

A structure of a build-in screw in a bushing having the features of claim 1 advantageously comprises a bushing made of metal and a elastic material at an inner region forming a flexible area in which a thread shank of the screw is pressed in by deforming the flexible area, so that the screw and the metal bushing are advantageously captively connected. So the screw is fixed by a press-in process only and it does not need an additional process to rotate the screw, and it also does not need additional parts to fix the screw inside the bushing.

According to the present invention, the metal bushing comprises at least one hole in a side wall through which the elastic material flows to the inner region of the bushing. For example, plastic is used as elastic material. Advantageously the elastic material flows to the inner region of the bushing during injection molding of a fastening attachment in which the metal bushing is to be integrated. The use of the metal bushing offers an improved stability of a corresponding joining and prevents a pull out of a through hole of the fastening attachment in which the bushing is arranged.

In another embodiment of the present invention, sensor housing comprises a fastening attachment with a bushing fixedly connected to the fastening attachment and a structure for a build-in screw according to an embodiment of the present invention. Due to the structure for a build-in screw according to an embodiment of the present invention an assembly process of the sensor housing can be improved and a reduction of cycle time can be achieved.

In further embodiments of the present invention, the sensor housing is an injection molding part wherein said metal bushing is advantageously used as insert during a corresponding injection molding process.

All in all, embodiments of the present invention disclosed herein introduce struc-ture of a build-in screw in a bushing which is easy to use and to fabricate. The screw is fixed by a press-in at the flexible plastic area in the inner region of the bushing and does not need a process to rotate the screw, and it does not need additional parts and allows using metal bushings to fix sensor housing at a given joint in the vehicle. The screw only contacts the bushing in the region of the flexible area inside the bushing. The screw is centrically guided by the length of the bushing. Assembly of the screw and of the bushing advantageously acquires low assembly forces. Pre-assembly may be well automatized since simple pressing of the screw with respect to the bushing is only necessary without any turning movement or bocking movement.

The above, as well as additional purposes, features, and advantages of the present invention will become apparent in the following detailed written description.

### Brief Description of the Drawings

A preferred embodiment of the invention, as described in detail below, is shown in the drawings, in which
FIG. 1 is a schematic perspective view of a sensor unit with a structure of a build-in screw in a bushing, in accordance with an embodiment of the present invention;
FIG. 2 is a partial sectional view of the sensor unit shown in Fig. 1;
FIG. 3 is a sectional view of the structure of a build-in screw in a bushing in a first position; and
FIG. 4 is a sectional view of the structure of a build-in screw in a bushing in a build-in position.

### Detailed Description of the Preferred Embodiments

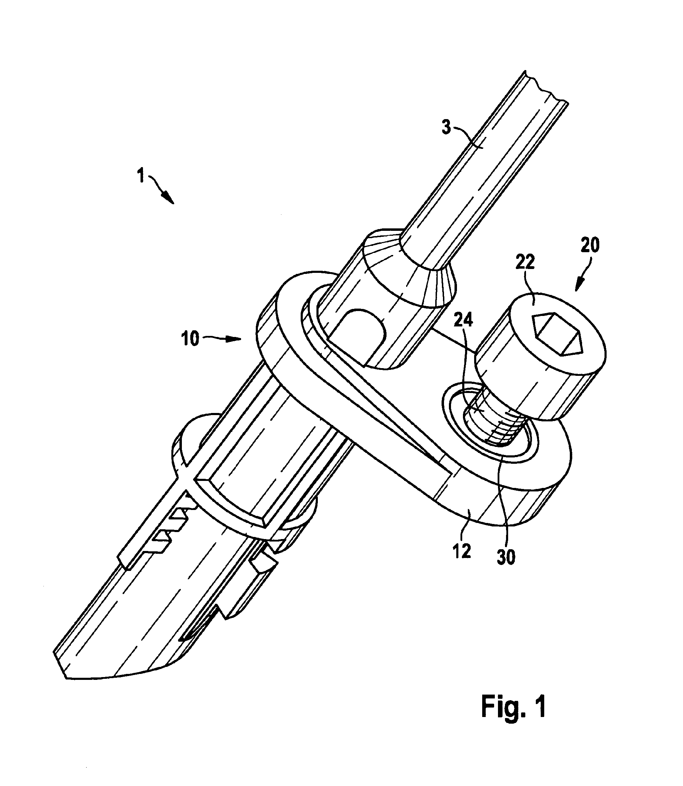

Referring to FIG. 1 to 4, the shown embodiment of the invention employs a structure of a build-in screw 20 in a bushing 40. The screw comprises a head 22 and a thread shank 24. The screw head 22 is designed and arranged to rotate the screw 20,here the screw head 22 comprises a hexagon socket for that purpose, for example. The bushing 30 is fixedly connected to a fastening attachment 12 of a sensor housing 10 of a sensor unit 1. Additionally the sensor unit 1 comprises a connecting cable 3 for electrically connecting a sensor element, not shown, inside the sensor housing 10. Preferably the sensor housing 10 is an injection molding part wherein the metal bushing 30 is used as insert during a corresponding injection molding process.

According to the present invention the bushing 30 is made of metal and comprises an elastic material 40 at an inner region 32 forming a flexible area 42 in which a thread shank 24 of the screw 20 is pressed in by deforming the flexible area 42, so that the screw 20 and the metal bushing 30 are captively connected. So the screw 20 can be pressed-in by deforming the flexible area 42 and can be fixed by elasticity of the flexible area 42.

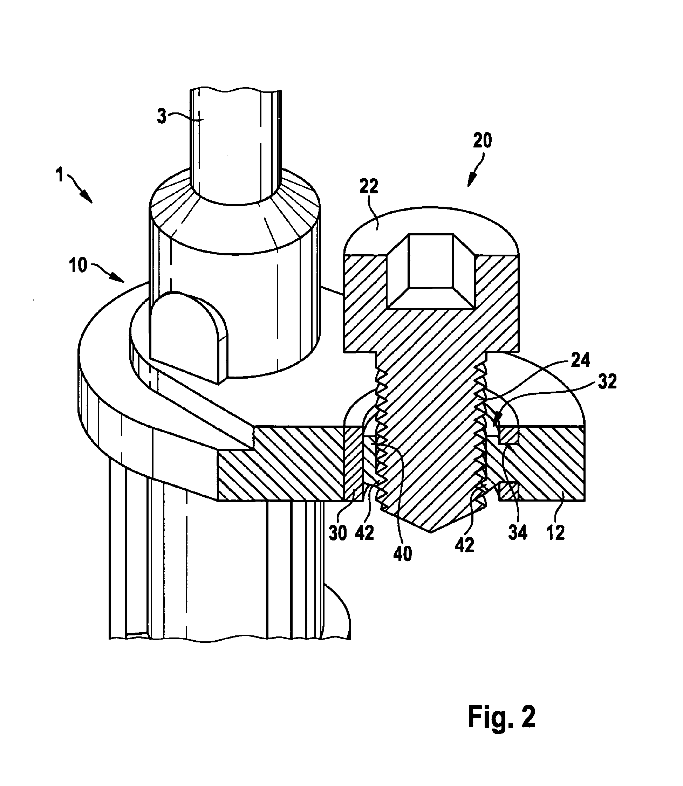

Referring to FIG. 2 to 4, the metal bushing 30 comprises at least one hole 34 in a side wall through which the elastic material 40 flows to the inner region 32 of the bushing 30. Preferably plastic is used as elastic material 40, wherein the elastic material 40 flows to the inner region 32 of the bushing 30 during the injection molding process of the fastening attachment 12 in which the metal bushing 30 is to be integrated.

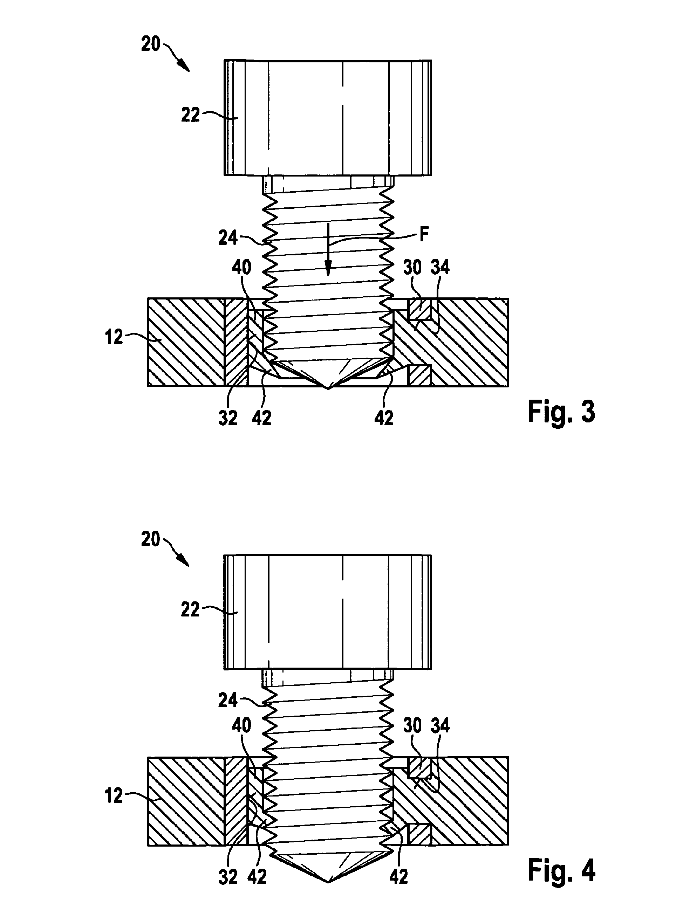

FIG. 3 shows the screw 20 inside the bushing where the screw is forced to move vertically through the flexible area 42 of the elastic material 40 due to an applied force F. FIG. 4 shows the screw 20 inside the bushing 30 in a build-in position, wherein the flexible area 42 fixes the screw 20 inside the bushing 30.

## Claims

1. A structure of a build-in screw in a bushing,
wherein said bushing (30) comprises an elastic material (40) at an inner region (32) forming a flexible area (42) in which a thread shank (24) of said screw (20) is pressed in by deforming said flexible area (42), so that said screw (20) and said bushing (30) are captively connected,
**characterized in that** said bushing (30) is made of metal and comprises at least one hole (34) in a side wall through which said elastic material (40) flows to said inner region (32) of said metal bushing (30).

2. The structure of claim 1, wherein plastic is used as elastic material (40).

3. The structure according to one of the preceding claims 1 or 2, wherein said elastic material (40) flows to said inner region (32) of said bushing (30) during injection molding of a fastening attachment (12) in which said metal bushing (30) is to be integrated.

4. A sensor housing comprising a fastening attachment (12) with a bushing (30) fixedly connected to said fastening attachment (12), comprising a structure for a build-in screw according to one of the preceding claims 1 to 3.

5. The sensor housing of claim 4, wherein said sensor housing (10) is an injection molding part wherein said metal bushing (30) is used as insert during a corresponding injection molding process.

## Patentansprüche

1. Struktur einer eingebauten Schraube in einer Buchse,
wobei die Buchse (30) ein elastisches Material (40) in einem Innenbereich (32) umfasst, der einen flexiblen Bereich (42) bildet, in dem ein Gewindeschaft (24) der Schraube (20) durch Verformen des flexiblen Bereichs (42) eingedrückt wird, sodass die Schraube (20) und die Buchse (30) unverlierbar verbunden sind, **dadurch gekennzeichnet, dass** die Buchse (30) aus einem Metall hergestellt ist und mindestens eine Bohrung (34) in einer Seitenwand umfasst, durch die das elastische Material (40) zu dem Innenbereich (32) der Metallbuchse (30) strömt.

2. Struktur nach Anspruch 1, wobei der Kunststoff als elastisches Material (40) verwendet wird.

3. Struktur nach einem der vorherigen Ansprüche 1 oder 2, wobei das elastische Material (40) zu dem Innenbereich (32) der Buchse (30) während des Spritzgießens einer Befestigung (12) strömt, in die die Metallbuchse (30) integriert werden soll.

4. Sensorgehäuse, umfassend eine Befestigung (12) mit einer Buchse (30), die fest mit der Befestigung (12) verbunden ist, umfassend eine Struktur für eine eingebaute Schraube nach einem der vorherigen Ansprüche 1 bis 3.

5. Sensorgehäuse nach Anspruch 4, wobei das Sensorgehäuse (10) ein Spritzgussteil ist, wobei die Metallbuchse (30) während eines entsprechenden Spritzgießverfahrens als Einsatz verwendet wird.

## Revendications

1. Structure de vis intégrée dans une douille,
ladite douille (30) comprenant un matériau élastique (40) au niveau d'une région interne (32) formant une zone flexible (42) dans laquelle une tige filetée (24) de ladite vis (20) est enfoncée par déformation de ladite zone flexible (42) de telle sorte que ladite vis (20) et ladite douille (30) soient connectées l'une à l'autre de manière captive,
**caractérisée en ce que** ladite douille (30) est en métal et comprend au moins un trou (34) dans une paroi latérale, à travers lequel ledit matériau élastique (40) s'écoule jusqu'à ladite région interne (32) de ladite douille métallique (30).

2. Structure selon la revendication 1, dans laquelle on utilise du plastique comme matériau élastique (40).

3. Structure selon l'une quelconque des revendications précédentes 1 ou 2, dans laquelle ledit matériau élastique (40) s'écoule vers ladite région interne (32) de ladite douille (30) au cours du moulage par injection d'une pièce de fixation (12) dans laquelle ladite douille métallique (30) doit être intégrée.

4. Boîtier de capteur comprenant une pièce de fixation d'attaches (12) avec une douille (30) connectée de manière fixe à ladite pièce de fixation (12), comprenant une structure pour une vis intégrée selon l'une quelconque des revendications précédentes 1 à 3.

5. Boîtier de capteur selon la revendication 4, dans lequel ledit boîtier de capteur (10) est une pièce moulée par injection, ladite douille métallique (30) étant utilisée en tant qu'insert au cours d'un processus de moulage par injection correspondant.
